# EUROPEAN PATENT SPECIFICATION

(11) **EP 3 351 700 B1**
(45) Date of publication and mention of the grant of the patent: **16.03.2022**
(21) Application number: 18152104.8
(22) Date of filing: 17.01.2018
(51) Int. Cl.: E04B 1/66, E04B 1/64, B32B 7/12, E02D 31/02, B32B 5/08, B32B 15/14, B32B 15/20

(54) **MULTILAYER SHEET AND METHOD FOR PREVENTING MOISTURE TRANSPORT IN BUILDINGS**
MEHRSCHICHTIGE FOLIE UND VERFAHREN ZUR VERHINDERUNG VON FEUCHTIGKEITSTRANSPORT IN GEBÄUDEN
FEUILLE MULTICOUCHE ET PROCÉDÉ POUR EMPÊCHER LE TRANSPORT DE L'HUMIDITÉ DANS DES BÂTIMENTS

(30) Priority: 18.01.2017 BE 201705029
(43) Date of publication of application: 25.07.2018
(73) Proprietor: R.A.P. Industries bvba, 3583 Paal (BE)
(72) Inventor: KENENS, Pascal, 3583 Paal (BE)
(74) Representative: Brantsandpatents bvba

(56) References cited:
- EP-A1- 2 803 782
- WO-A1-2015/183080
- DE-U1- 20 110 189
- JP-A- 2003 113 662
- US-A1- 2003 178 121
- Tesa: "Reinforced Foil Tape "solutions for the glazing industry!"", AUGUST 2015 Call 1300 ALSPEC, 31 August 2015 (2015-08-31), XP055706291, Retrieved from the Internet: URL:https://web.archive.org/web/2018040511 0741if_/http://www.alspec.com.au/_assets/b rochures/Reinforced-Foil-Tape.pdf [retrieved on 2020-06-18]

## Description

### TECHNICAL FlELD

The invention relates to a layered structure according to claim 1 and a method for preventing moisture transfer in a building structure according to claim 10, preferably preventing ascending moisture in a wall. The layered structure comprises a bitumen layer, a UV-resistant top layer on an upper side of the bitumen layer, and a protective film on a lower side of the bitumen layer.

### PRIOR ART

Bitumen is a commonly used mixture in the construction industry. It can be separated from crude oil by fractional distillation from other components such as naphtha, petrol and diesel. It can also occur as such in nature, e.g. formed from an algae-containing sediment layer by means of heat and pressure. It is an important constituent of asphalt and as such is used in road surfacing, roof cladding and sound insulation. It is also used in watertight shielding layers to prevent moisture transfer. Although bitumen has different properties of a solid substance at room temperature, physically speaking it is a glass. At higher temperatures, the fluidity of bitumen increases.

Bitumen is used in structures to prevent moisture transfer due to its watertightness. WO 01/73242 describes a watertight membrane with a rough surface, suitable for watertight shielding of structural elements, and a process for producing it. The structural elements that are shielded in this regard are primarily sloping roofs. The watertight membrane has a surface coated with a plastic film and/or plastic fabric, the outer surface of the plastic film and/or the plastic fabric being at least partially roughened by protrusions to increase the coefficient of friction, to ensure that nobody slips over it, which of course should be avoided when the membrane is applied on a sloping roof. In an embodiment of the watertight membrane, the coating of plastic film and/or plastic fabric is made of black plastic to make the membrane UV resistant. However, the membrane from WO 01/73242 has been specifically developed to seal roofs watertight, i.e. to shield moisture from above from seeping through to the structural elements under the roof, and this in a permanent manner. In addition, a roof is immediately made completely moisture-proof by having the roof cladding properly connect to the other structural elements such as the upstanding walls, for example, by means of burning or roofing of the covering layer.

However, the covering layer described in WO 01/73242 is particularly suitable for covering roofs, especially sloping roofs, but is not suitable for combating the problem of ascending moisture in walls, especially cavity walls.

Bitumen is sensitive to light and in particular to UV light. WO 01/73242 describes an embodiment of a bitumen-comprising roof covering that is exposed to daylight. The UV light may cause the properties of the bitumen to change, in particular its watertightness, which decreases in proportion to exposure to UV light. It is important in such a situation to shield the bitumen layer from UV light in order to prevent hardening and maintain its watertightness, which is solved in WO 01/73242 by applying a black plastic layer on the outside, i.e. on the side exposed to the outside air.

However, the coating made of black plastic to protect the watertight membrane from incident UV light absorbs incident light, which increases the temperature of the surface and therefore of the membrane. Too high a temperature is furthermore detrimental to the bitumen layer.

DE 201 10 189 U1 and JP 2003 113 662 A describe devices comprising a bitumen layer, a UV-resistant top layer, and a protective film. However, these devices are not configured for the application of further structural elements to the top layer.

The present invention aims to solve at least some of the problems mentioned above.

### BRIEF SUMMARY OF THE INVENTION

In a first aspect, the present invention concerns a layered structure for the prevention of moisture transfer in a building structure comprising the features of claim 1.

The UV-resistant top layer comprises aluminium, more preferably an aluminium foil, to make the layered structure at least partially UV reflective to light from above. By applying the layered structure, by which the UV-resistant, and the aluminium UV-resistant, top layer shields the bitumen layer, not only is the bitumen layer protected against UV light, but part of the incident light is also reflected. This helps to prevent the layered structure from warming up.

The top layer comprises fibres that bring about irregularities on the surface of the layered structure. The irregularities brought about by the fibres are suitable for attachment of building materials such as concrete, block joining adhesive, cement, grout, mortar and plaster. The UV-resistant top layer comprises an aluminium foil comprising the fibres, to make the layered structure at least partially UV reflective to light from above.

In a second aspect, the present invention involves a method for preventing moisture transfer in a building structure with the features of claim 10.

The building structure can comprise a wall, preferably a masonry cavity wall, the layered structure serving to prevent ascending moisture. The wall can border on a terrace comprising a substructure. An extension sheet can be applied to the layered structure and cover the substructure to protect at least part of the terrace. By providing a layered structure with a placement line and a corresponding essentially parallel pre-cut line, the protective sheet can be easily positioned correctly so that part of the protective film adjacent to the pre-cut line can be easily removed for sticking of the extension sheet. Moreover, by sticking, instead of bonding by heating, there is substantially less risk of the release of toxic substances and consequently of their inhalation or absorption into the skin. Sticking can also be carried out quickly and does not require any additional waiting times.

A peelable protective film can be easily removed when a part of the lower side of the bitumen layer needs to be stuck to the adhesive lower side on a cavity wall over the cavity, while another part of the protective film still protects the adhesive lower side of the bitumen layer, so that this part does not need to be stuck directly. In a further construction step, typically when the layered structure is connected to, for example, a further impermeable layer for a terrace, the protective film can then be completely removed so that the adhesive lower side of the bitumen layer can be stuck to an abutting covering layer.

In a third aspect, the current invention involves using the method according to the second aspect, for preventing ascending moisture in a wall, preferably a cavity wall, preferably the wall adjacent to a substructure for a terrace, the extension sheet at least partially covering the substructure of the terrace.

In a fourth aspect, the present invention involves using the layered structure according to the first aspect, to prevent moisture transfer at a window connection.

In a fifth aspect, the present invention involves using the layered structure according to the first aspect, to prevent moisture transfer at a façade support.

In a sixth aspect, the present invention involves a building structure comprising a wall comprising a layered structure according to the first aspect.

### BRIEF DESCRIPTION OF THE DRAWINGS

**Figure 1** shows a schematic representation of a cross-sectional view of a layered structure according to the present invention.
**Figure 2** shows a schematic representation of a wall under construction comprising a layered structure according to the present invention.
**Figure 3** shows a schematic representation of a wall with a window, adjacent to a substructure of a terrace under construction, a layered structure according to the present invention preventing ascending moisture in the wall and being partially stuck to an extension sheet for shielding at least part of the terrace.
**Figure 4** shows a schematic representation of a cross-sectional view of a layered structure according to the present invention.

### DETAILED DESCRIPTION

The invention relates to a layered structure and a method for preventing moisture transfer in a building structure. The invention was summarised in the section provided for this purpose. Below is a detailed description of the invention based on preferred embodiments as well as examples.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, 'a' and 'the' refer to both the singular and the plural, unless the context presupposes otherwise. For example, 'a segment' means one or more segments.

When 'approximately' or 'around' is used in this document with a measurable quantity, a parameter, a length of time or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations apply in the described invention. However, it must be understood that the value of a quantity used where the term 'approximately' or'around' is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Quoting numerical intervals by the endpoints comprises all integers, fractions and/or real numbers between the endpoints, these endpoints included.

A non-exhaustive sample list of plastics comprises acrylonitrile butadiene styrene (ABS), ethylene acrylic acid (EAA), ethylene ethyl acrylate (EEA), ethylene methylacrylate (EMA), ethylene-vinyl acetate (EVA), ethylene vinyl alcohol (EVOH), phenol formaldehyde (PF), glycol-modified polyethylene terephthalate (PET-G),high impact polystyrene (HIPS), high-density polyethylene (HDPE), ionomers (ION), low-density polyethylene (LDPE), linear low-density polyethylene (LLDPE), melamine formaldehyde (MF), polyamide (PA), polybutylene (PB), polycarbonate (PC), polyepoxides (epoxy), polyester (PES), polyetheretherketone (PEEK), polyetherimide (PEI), polyethylene (PE), polyethylene naphthalene (PEN), polyethylene terephthalate (PET), polyimide (PI), polylactic acid (PLA), polymethyl methacrylate (PMMA), polypropylene (PP), polystyrene (PS), polytetrafluoranthene (PTFE), polyurethane (PU), polyvinyl acetate (PVAC), polyvinyl chloride (PVC), polyvinylidene chloride (PVDC), styrene acrylonitrile (SAN), and urea formaldehyde (UF).

In a first aspect, the present invention concerns a layered structure for the prevention of moisture transfer in a building structure. The layered structure comprises a bitumen layer comprising an adhesive lower side and an upper side. The layered structure comprises a UV-resistant top layer on the upper side of the bitumen layer and a protective film on the lower side of the bitumen layer. Preferably, the layered structure, in particular, is configured for preventing ascending moisture in a wall.

In a second aspect, the present invention involves a method for preventing moisture transfer in a building structure. A first part of the building structure is built. The first part comprises a substantially horizontal surface comprising a first edge. A layered structure according to the first aspect of the current invention is provided. The top layer of the layered structure can comprise a visually observable placement line. The protective film can comprise a pre-cut line, which is substantially parallel to the placement line. A part of the layered structure is applied to the horizontal surface. The top layer of the layered structure is located at the top. The placement line is positioned as close as possible against the first edge of the surface, i.e. the first edge and the placement line are positioned substantially coaxially, it being understood that the bitumen layer still separates the placement line and the first edge. A second part of the building structure is then built on the top layer of the applied part of the layered structure. An extension sheet is provided. The extension sheet can also have a shielding effect, e.g. be watertight. Part of the protective film adjacent to the pre-cut line is removed. The extension sheet is then stuck to at least a portion of the part of the layered structure that has been stripped of the protective film.

The building structure can comprise a wall, preferably a masonry cavity wall, the layered structure serving to prevent ascending moisture. The wall can border on a terrace comprising a substructure. An extension sheet can be applied to the layered structure and cover the substructure to protect at least part of the terrace. By providing a layered structure with a placement line and a corresponding parallel pre-cut line, the protective sheet can be easily positioned correctly so that a part of the protective film bordering on the pre-cut line can be easily removed for sticking of the extension sheet. Typically, bitumen layers are attached to each other by means of heating instead of sticking. By sticking, instead of bonding by heating, there is substantially less risk of the release of toxic substances and consequently of their inhalation or absorption into the skin. Sticking can also be carried out quickly and does not require any additional waiting times.

A peelable protective film can be easily removed when a part of the lower side of the bitumen layer needs to be stuck to the adhesive lower side on a cavity wall over the cavity, while another part of the protective film still protects the adhesive lower side of the bitumen layer, so that this part does not need to be stuck directly. In a further construction step, typically when the layered structure is connected to, for example, a further impermeable layer for a terrace, the protective film can then be completely removed so that the adhesive lower side of the bitumen layer can be stuck to an abutting covering layer.

In a third aspect, the current invention involves using the method according to the second aspect, for preventing ascending moisture in a wall, preferably a cavity wall, preferably the wall adjacent to a substructure for a terrace, the extension sheet at least partially covering the substructure of the terrace.

In a fourth aspect, the present invention involves using the layered structure according to the first aspect, to prevent moisture transfer at a window connection.

In a fifth aspect, the present invention involves using the layered structure according to the first aspect, to prevent moisture transfer at a façade support.

In a sixth aspect, the present invention involves a building structure comprising a wall comprising a layered structure according to the first aspect.

A person having ordinary skill in the art will appreciate that the six different aspects of the present invention are related. In what follows, therefore, no distinction is made between the various aspects. All above and following features, preferred embodiments, and examples may relate to any of these aspects.

The top layer comprises fibres that bring about irregularities on the surface of the layered structure. The irregularities brought about by the fibres are suitable for attachment of building materials such as concrete, block joining adhesive, cement, grout, mortar and plaster.

This is advantageous because the layered structure can be used for preventing ascending moisture in a wall, e.g. a cavity wall. The wall is thus substantially horizontally interrupted by a layered structure according to the present invention. To complete a mortar wall above the layered structure, cement must be applied on the layered structure. To this end, the cement must be able to adhere sufficiently, and a rough surface comprising irregularities is appropriate for this.

The fibres comprise glass fibres. Due to the glass fibres in the top layer, it has a larger tensile strength and the layered structure is consequently strengthened. In addition, the glass fibres fulfil a double function: reinforcement as well as providing irregularities for cement adhesion.

The fibres comprise plastic fibres. This is advantageous because plastic fibres can be easily applied on the aluminium top layer by means of heating. Preferably, the fibres will comprise polyester fibres. Applied polyester fibres are also resistant to ambient temperatures and warming by sunlight.

The fibres comprise plastic fibres and/or glass fibres, preferably polyester fibres and/or glass fibres, and more preferably polyester fibres. In a preferred embodiment, the fibres in the top layer comprise an essentially isotropic distribution of orientation. This is advantageous because the attached building material can then withstand forces from a plurality of directions essentially parallel to the top layer. Fibres in the top layer with an essentially unidirectional distribution of orientation provide good resistance to forces perpendicular to this direction, but only a reduced resistance to forces parallel to this direction. The fibres in the top layer can comprise essentially rectilinear fibres and/or curved fibres.

In a preferred embodiment, the top layer comprises at least 30 fibres/cm², preferably at least 50 fibres/cm², more preferably at least 70 fibres/cm², even more preferably at least 90 fibres/cm², and most preferably at least 110 fibres/cm².

In a preferred embodiment, a fibre comprises a length of at least 3 cm, preferably at least 5 cm, more preferably at least 7 cm, even more preferably at least 9 cm, and most preferably at least 11 cm. This is advantageous because longer fibres ensure better adhesion, both on the top layer and with the building material.

The UV-resistant top layer comprises aluminium, more preferably an aluminium foil, to make the layered structure at least partially UV reflective to light from above. By applying the layered structure, by which the UV-resistant, and preferably the aluminium UV-resistant, top layer shields the bitumen layer, not only is the bitumen layer protected against UV light, but part of the incident light is also reflected. This helps to prevent the layered structure from warming up. Preferably, said aluminium foil comprises said fibres.

In a preferred embodiment, the lower side of the bitumen layer is self-adhesive. Preferably, the upper side of the bitumen layer is self-adhesive. Preferably, the bitumen layer is self-adhesive.

In a preferred embodiment, the protective film is water-resistant. Preferably, the protective film comprises a synthetic material. Preferably, this synthetic material is a plastic. Preferably, the protective film comprises polyethylene (e.g. high-density polyethylene, low-density polyethylene and/or linear low-density polyethylene).

In a preferred embodiment, the protective film comprises an outer surface comprising a light reflectivity that is at least 10%, preferably at least 20%, more preferably at least 30%, higher than the light reflectivity of the lower side of the bitumen layer. This is advantageous in order to clearly distinguish the protective film visually from the lower side of the bitumen layer.

In a preferred embodiment, the protective film of the layered structure is peelable. Preferably, the protective film of the layered structure is peelable in parts. This is advantageous because a first part of the protective film can be easily peeled off to apply a first part of the adhesive lower side of the bitumen layer to a wall, while a second part of the protective film can only be removed later for sticking another protective device to a second part of the adhesive lower side of the bitumen layer. The other protective device can be a layered structure according to the current invention for enlarging the layered structure. The other protective device may also comprise other features and/or be another type of protective device.

In a preferred embodiment, the top layer makes direct contact with the upper side of the bitumen layer and the protective film makes direct contact with the lower side of the bitumen layer.

In a preferred embodiment, the layered structure can be rolled up. The layered structure therefore comprises a rolled-up and a flat state. In the flat state, the layered structure is substantially beam-shaped and comprises a longitudinal direction, a transverse direction and a thickness direction, with the three directions being mutually orthogonal.

This is advantageous because it allows compact transport of the layered structure. Furthermore, the plasticity of the layered structure is also advantageous in use, because accidental collisions or the application of the layered structure to uneven surfaces and any resulting deformation of the layered structure, are not harmful to the layered structure.

In a preferred embodiment, the layered structure comprises a visually observable placement line. Preferably, the layered structure is printed with a placement line in a colour that can be clearly distinguished from the top layer.

In a preferred embodiment, the protective film may comprise a pre-cut line for easy removal of part of the protective film adjacent to the pre-cut line. Preferably, the placement line and the pre-cut line should be substantially parallel. Preferably, the placement line and the pre-cut line should be parallel to the longitudinal direction of the layered structure in the flat state. Preferably, the placement line should be suitable for positioning at a rectilinear edge of a substantially horizontal surface to define a surface-contacting portion and an overhanging portion of the layered structure, the overhanging portion comprising the pre-cut line for easy peeling off of a portion of the protective film.

This is advantageous because the layered structure is placed with the top layer at the top. A placement line on the top layer can then serve as an indication of how the layered structure should be placed, as well as where the pre-cut line in the protective film is located.

In a preferred embodiment, the protective film comprises two pre-cut lines, which divide the protective film into a first, a second and a third strip. The second strip is here positioned between the first and the third strip. Preferably, the two pre-cut lines should be substantially parallel to the placement line. This allows the protective film to be removed as follows:
- After the construction of said first part of the building structure, the first part comprising said substantially horizontal surface comprising said first edge, the first strip can be removed and the thus exposed part of the bitumen layer can be applied at least partially to the substantially horizontal surface. This will allow correct positioning, without the risk of accidental sticking to each other of the exposed part of the bitumen layer.
- Subsequently, the second strip can be removed and the portion of the bitumen layer thus exposed can at least partially be applied to the substantially horizontal surface. Preferably, said first edge and said placement line will here be positioned substantially coaxially.
- After that, said second part of the building structure can be built on the applied part of the layered structure.
- Finally, the third strip can be removed and an extension sheet can be stuck to at least part of the part of the bitumen layer thus exposed.

In a preferred embodiment, the protective film comprises a tear-off line comprising perforations. Preferably, a pre-cut line is a tear-off line comprising perforations. The perforations comprise a length according to the tear-off line and an intermediate spacing distance. The length should preferably be at least 1 mm and at most 3 mm, preferably at least 1.6 mm and at most 2.4 mm. The ratio of the length to the spacing distance should preferably be at least 1 and at most 3, more preferably at least 1.5 and at most 2.5. This is advantageous for easily removing a portion of the protective film.

In what follows, the invention will be described by way of non-limiting examples illustrating the invention, and which are not intended to and should not be interpreted as limiting the scope of the invention.

### EXAMPLES

### EXAMPLE 1

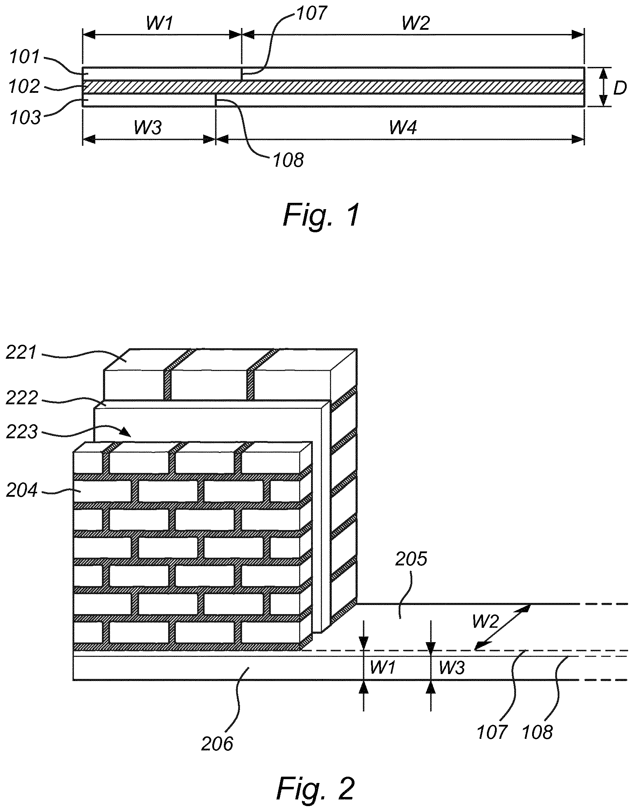

**Figure 1** shows a schematic representation of a cross-sectional view of a layered structure according to the present invention. The layered structure comprises an aluminium UV-resistant top layer **101** for stopping UV light. Furthermore, the aluminium top layer **101** reflects sunlight instead of absorbing it. This prevents the layered structure from heating up. The aluminium top layer **101** further comprises glass fibres and/or polyester fibres. These fibres reinforce the aluminium top layer **101** and consequently the structure. The fibres thus provide a greater tensile strength of the layered structure. Furthermore, these fibres cause irregularities in the aluminium top layer **101** for promoting cement adhesion. The layered structure further comprises a bitumen layer **102** for watertight shielding and a water-resistant protective film **103.** The bitumen layer **102** is self-adhesive after removal of the protective film **103.** The top layer is provided with a visually observable placement line **107.** The protective film **103** is provided with a pre-cut line **108** parallel to the placement line **107** for peeling the protective film off in parts.

### EXAMPLE 2

The layered structure described in example 1 can comprise a thickness **D** of approximately 1.2 mm, a length of approximately 25 metres, and a width of approximately 450 mm. The top layer **101** is subdivided in the width by the placement line **107** in a first part having a width **W1** of approximately 110 mm and a second part having a width **W2** of approximately 340 mm. The second part of the top layer is thus suitable for applying in cavity walls, and the first part of the top layer for hanging over from the cavity wall. Corresponding to the first part of the top layer **101**, a pre-cut line **108** is provided in the protective film **103.** The pre-cut line **108** is thus parallel to the placement line **107.** The pre-cut line **108** subdivides the protective film into a first portion having a width **W3** of approximately 100 mm and a second portion having a width **W4** of approximately 350 mm. When the first part of the top layer overhangs from the cavity wall, the first part of the protective film can be easily removed by the pre-cut line for attachment of another sheet. The attachment is done by means of sticking.

Preferably, the layered structure is supplied rolled up. The rolling axis is thus substantially parallel to the width direction of the layered structure in the flat state.

### EXAMPLE 3

However, the layered structure from example 2 can also comprise other dimensions. An example of other dimensions is a thickness **D** of approximately 1.2 mm, a length of approximately 25 metres, an total width of approximately 1 metre, a width **W1** of approximately 310 mm, a width **W2** of approximately 690 mm, a width **W3** of approximately 300 mm, and a width **W4** of approximately 700 mm.

### EXAMPLE 4

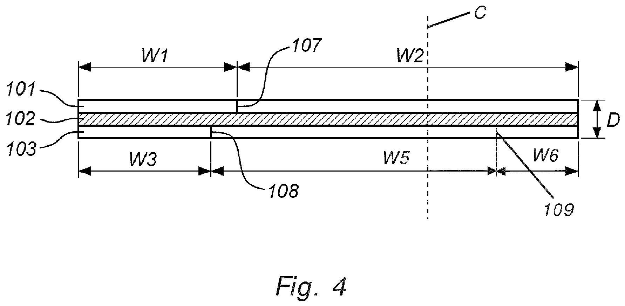

**Figure 4** shows a schematic representation of a cross-sectional view of a layered structure according to the present invention. The layered structure is configured for preventing moisture transfer in a building structure, preferably for preventing ascending moisture in a wall. The layered structure comprises a self-adhesive bitumen layer **102,** an aluminium UV-resistant top layer **101** comprising at least 30 fibres/cm² in contact with an upper side of the bitumen layer, and a water-resistant peelable protective film **103** in contact with a lower side of the bitumen layer. The fibres comprise polyester fibres and/or glass fibres. The fibres in the top layer comprise an essentially isotropic distribution of orientation. At least 50% of the fibres comprise a length of at least 5 cm.

The top layer **101** comprises a visually observable placement line **107.** The protective film **103** comprises two tear-off lines **108, 109** comprising perforations. The layered device comprises a flat state where the tear-off lines are essentially parallel to the placement line. The perforations comprise a perforation length and an intermediate spacing distance. The perforation length is about 2 mm and the spacing distance is about 1 mm. The ratio of the perforation length to the spacing distance is consequently approximately 2.

The layered structure of this example comprises a thickness D of about 1.2 mm, a length of about 25 metres, and a total width **W1 + W2 = W3 + W5 + W6** of about 1 metre. In this case, width **W1** is approximately 310 mm and width **W2** is approximately 690 mm. Further, width **W3** is about 300 mm, width **W5** is about 610 mm, and width **W6** is about 90 mm.

The layered structure can be rolled up to a rolled-up state for transport.

The protective film comprises three strips defined by the two tear-off lines. These three strips can be peeled off successively, as discussed in the detailed description, in order to prevent the bitumen layer from sticking to itself. Alternatively, the layered structure can be divided into two parts, e.g. via cutting, according to the cutting plane **C,** and the two parts can be used separately. Preferably, a first portion comprising tear-off line **108** comprises a width of about 710 mm and a second portion comprising tear-off line **109** comprises a width of about 290 mm. For this purpose the top layer can comprise a visually observable cutting line at the desired position (cutting plane **C**).

### EXAMPLE 5

**Figure 2** shows a schematic representation of a wall under construction comprising a layered structure according to the present invention. The wall comprises an outer leaf **204,** an air layer **223,** insulation **222,** and a perforated brick wall ('snelbouwmuur') **221 .** This cavity wall is interrupted by a layered structure according to any of the preceding examples. In figure 2, the top layer of the layered structure is visible. This top layer comprises a first part **206** having a width **W1** and a second part **205** having a width **W2.** These parts are separated from each other by the placement line **107.** The placement line **107** is placed on the outer wall of the cavity wall, i.e. at the front of the outer leaf **204.** The placement line **107** is essentially located in the outer face of the cavity wall. The overhanging portion of the layered structure comprises a pre-cut line **108** in the protective film for easy removal of a portion of the protective film and sticking of another sheet to the part of the layered structure that has been stripped of protective film.

### EXAMPLE 6

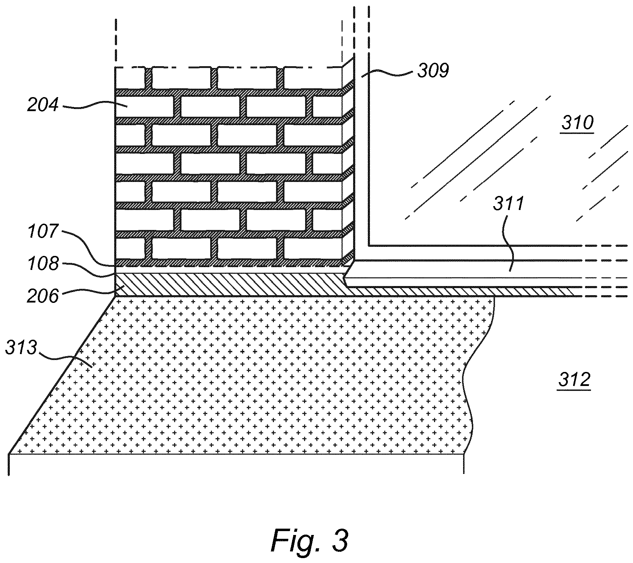

**Figure 3** shows a schematic representation of a wall with a window adjacent to a substructure of a terrace. The wall with window can be obtained, for example, by further finishing of the wall shown in figure 2. Visible in figure 3 are the outer leaf **204,** the placement line **107,** and the first part **206** of the top layer. A windowsill **311** is applied to a part of the second part of the top layer with the aid of cement. A window frame **309** and double or triple glazing **310** are further placed in the recess of the wall. The protective film of the overhanging part of the layered structure is removed up to the pre-cut line **108.** An extension sheet **313** is applied on the self-adhering surface that has become free for the watertight covering of the substructure **312** of a terrace.

This allows the terrace to be left unfinished for a longer period of time, while the house comprising the wall can already be inhabited. After all, due to the aluminium UV-resistant top layer, the bitumen layer in the overhanging part of the layered structure will remain unaffected by incident UV light and consequently flexible.

### EXAMPLE 7

The layered structure according to the present invention can be arranged to be applied on Ytong^{®}, perforated bricks (NL: snelbouwstenen), precast concrete, cast concrete, Diba^{®}, roofing, insulation, silicate stone, plastic pipes, facade supports, Gutex^{®}, metals, OSB boards, veneer wood, Marmox^{®}, window profiles, and/or other elements used in structural constructions.

### EXAMPLE 8

Table 1 list the results of various tests, performed on a preferred embodiment of the layered structure according to the present invention.

**Table 1: test results of a preferred embodiment of the layered structure**

| **Characteristics** | **Value:** | **Test:** |
|---|---|---|
| Thickness | 1.2 mm | EN 1849-1 |
| Tensile strength | Length: 215 N / 50 mm | EN 12311-1 |
| | Width: 220 N / 50 mm | |
| Elongation after fracture | Length: 15% | EN 12311-1 |
| | Width: 20% | |
| Impact resistance | Met. A 500 mm | EN 12691 |
| | Met. B 1000 mm | |
| Static load resistance | Met. A 15 kg | EN 12730 |
| | Met. B 20 kg | |
| Tear resistance | Length: 70 N | EN 12310-1 |
| | Width: 70 N | |
| Impermeability | Pass (≥ 60 kPa) | EN 1928 |
| Water vapour permeability | Pass (Sd ≥ 1500 m) | EN 12572 |
| Processing temperature | From -5°C to +45°C | - |
| Temperature resistant | From -40°C to +80°C | - |

## Claims

1. Layered structure for preventing moisture transfer in a building structure, the layered structure comprising a bitumen layer, the bitumen layer comprising a self-adhesive lower side and an upper side, the layered structure comprising a UV-resistant top layer at the upper side of the bitumen layer and a water-resistant peelable protective film on the lower side of the bitumen layer, the top layer being an aluminium UV-resistant top layer, **characterized in that** the top layer comprises fibres bringing about irregularities at the surface of the layered structure suitable for attachment of building materials such as concrete, block joining adhesive, cement, grout, mortar and plaster, wherein the fibres comprise plastic fibres and/or glass fibres, preferably polyester fibres and/or glass fibres, and more preferably polyester fibres.

2. Layered structure according to any of the preceding claims, the fibres comprising polyester fibres.

3. Layered structure according to any of the preceding claims, the fibres in the upper layer comprising an essentially isotropic distribution of orientation.

4. Layered structure according to any one of the preceding claims, the fibres comprising a length of at least 3 cm, preferably at least 5 cm, more preferably at least 7 cm, even more preferably at least 9 cm, and most preferably at least 11 cm.

5. Layered structure according to any of the preceding claims, the top layer comprising at least 30 fibres/cm², preferably at least 50 fibres/cm², more preferably at least 70 fibres/cm², even more preferably at least 90 fibres/cm², most preferably at least 110 fibres/cm².

6. Layered structure according to any of the preceding claims, the water-resistant protective film being peelable in parts.

7. Layered structure according to preceding claim 6, the water-resistant protective film comprising a tear-off line comprising perforations.

8. Layered structure according to preceding claim 7, the perforations comprising a length and an intermediate spacing distance, the length being at least 1 mm and at most 3 mm, the length preferably being at least 1.6 mm and at most 2.4 mm, the ratio of the length to the spacing distance being at least 1 and at most 3, preferably at least 1.5 and at most 2.5.

9. Layered structure according to any of the preceding claims, the UV-resistant top layer contacting the upper side of the bitumen layer and the water-resistant protective film making contact with the self-adhesive lower side of the bitumen layer.

10. Method for preventing moisture transfer in a building structure comprising the following steps:
- building a first part of the building structure, the first part comprising a substantially horizontal surface, the surface comprising a first edge;
- providing a layered structure according to any of the preceding claims 1 to 9, the top layer comprising a visually observable placement line and the protective film comprising a pre-cut line substantially parallel to the placement line;
- applying a portion of the layered structure to the surface with the first edge and the placement line being positioned substantially coaxially;
- building a second part of the building structure on the applied part of the layered structure;
- providing an extension sheet;
- peeling off a part of the protective film adjacent to the pre-cut line; and
- sticking the extension sheet to at least a portion of the part of the layered structure that has been stripped of the protective film.

11. Method according to the preceding claim 10, used for preventing ascending moisture in a wall, the wall preferably being a cavity wall, preferably the wall adjacent to a substructure for a terrace, the extension sheet at least partially covering the substructure of the terrace.

12. Method according to the preceding claim 10, used for preventing moisture transfer at a window connection.

13. Method according to the preceding claim 10, used for preventing moisture transfer at a façade support.

14. Building structure comprising a wall comprising a layered structure according to any of the preceding claims 1 to 9.

## Patentansprüche

1. Schichtenstruktur zum Verhindern der Feuchtigkeitsübertragung in einer Gebäudestruktur, wobei die Schichtenstruktur eine Bitumenschicht umfasst, wobei die Bitumenschicht eine selbsthaftende Unterseite und eine Oberseite umfasst, wobei die Schichtenstruktur auf der Oberseite der Bitumenstruktur eine UV-resistente obere Schicht und auf der Unterseite der Bitumenschicht eine wasserfeste abziehbare Schutzfolie umfasst, wobei die obere Schicht eine UV-resistente obere Schicht aus Aluminium ist, **dadurch gekennzeichnet, dass** die obere Schicht Fasern umfasst, die auf der Oberfläche der Schichtenstruktur Unregelmäßigkeiten herbeiführen, die zum Anbringen von Baumaterialien, wie beispielsweise Beton, Porenbetonhaftstoff, Zement, Einpressmörtel, Mörtel und Putzmörtel, geeignet sind, wobei die Fasern Kunststofffasern und/oder Glasfasern, vorzugsweise Polyesterfasern und/oder Glasfasern und bevorzugter Polyesterfasern umfassen.

2. Schichtenstruktur nach einem der vorhergehenden Ansprüche, wobei die Fasern Polyesterfasern umfassen.

3. Schichtenstruktur nach einem der vorhergehenden Ansprüche, wobei die Fasern in der oberen Schicht eine im Wesentlichen isotrope Verteilung der Orientierung umfassen.

4. Schichtenstruktur nach einem der vorhergehenden Ansprüche, wobei die Fasern eine Länge von mindestens 3 cm umfassen, vorzugsweise mindestens 5 cm, bevorzugter mindestens 7 cm, noch bevorzugter mindestens 9 cm und am meisten bevorzugt mindestens 11 cm.

5. Schichtenstruktur nach einem der vorhergehenden Ansprüche, wobei die obere Schicht mindestens 30 Fasern/cm² umfasst, vorzugsweise mindestens 50 Fasern/cm², bevorzugter 70 Fasern/cm², noch bevorzugter mindestens 90 Fasern/cm², am meisten bevorzugt mindestens 110 Fasern/cm².

6. Schichtenstruktur nach einem der vorhergehenden Ansprüche, wobei die wasserfeste Schutzfolie in Teilen abziehbar ist.

7. Schichtenstruktur nach Anspruch 6, wobei die wasserfeste Schutzfolie eine Abrisslinie umfasst, welche Perforationen umfasst.

8. Schichtenstruktur nach Anspruch 7, wobei die Perforationen eine Länge und einen Zwischenabstand umfassen, wobei die Länge mindestens 1 mm und höchstens 3 mm beträgt, die Länge vorzugsweise mindestens 1,6 mm und höchstens 2,4 mm beträgt und das Verhältnis der Länge zu dem Zwischenraum mindestens 1 und höchstens 3 beträgt, vorzugsweise mindestens 1,5 und höchstens 2,5.

9. Schichtenstruktur nach einem der vorhergehenden Ansprüche, wobei die UV-resistente obere Schicht mit der Oberseite der Bitumenschicht in Kontakt steht und die wasserfeste Schutzfolie in Kontakt mit der selbsthaftenden Unterseite der Bitumenschicht steht.

10. Verfahren zum Verhindern der Feuchtigkeitsübertragung in einer Gebäudestruktur, folgende Schritte umfassend:
- Errichten eines ersten Teils der Gebäudestruktur, wobei der erste Teil eine im Wesentlichen horizontale Oberfläche umfasst, wobei die Oberfläche eine erste Kante umfasst,
- Bereitstellen einer Schichtenstruktur nach einem der vorhergehenden Ansprüche 1 bis 9, wobei die obere Schicht eine visuell wahrnehmbare Platzierungslinie umfasst und die Schutzfolie eine vorgefertigte Trennungslinie umfasst, die im Wesentlichen parallel zu der Platzierungslinie liegt,
- Anbringen eines Abschnitts der Schichtenstruktur an der Oberfläche, wobei die erste Kante und die Platzierungslinie im Wesentlichen koaxial positioniert werden,
- Errichten eines zweiten Teils der Gebäudestruktur auf dem angebrachten Teil der Schichtenstruktur,
- Bereitstellen eines Erweiterungsblechs,
- Abziehen eines Teils der Schutzfolie, der an die vorgefertigte Trennlinie grenzt, und
- Ankleben des Erweiterungsblechs an mindestens einen Abschnitt des Teils der Schichtenstruktur, der von der Schutzfolie befreit wurde.

11. Verfahren nach dem vorhergehenden Anspruch 10, verwendet zum Verhindern von aufsteigender Feuchtigkeit in einer Wand, wobei die Wand vorzugsweise eine Hohlraumwand ist, vorzugsweise die Wand neben einer Unterstruktur für eine Terrasse, wobei das Erweiterungsblech die Unterstruktur der Terrasse zumindest teilweise abdeckt.

12. Verfahren nach dem vorhergehenden Anspruch 10, verwendet zum Verhindern von Feuchtigkeitsübertragung an einer Fensterverbindung.

13. Verfahren nach dem vorhergehenden Anspruch 10, verwendet zum Verhindern von Feuchtigkeitsübertragung an einer Fassadenstütze.

14. Gebäudestruktur, eine Wand umfassend, die eine Schichtenstruktur nach einem der vorhergehenden Ansprüche 1 bis 9 umfasst.

## Revendications

1. Structure stratifiée pour empêcher le transfert de l'humidité dans une structure de bâtiment, la structure stratifiée comprenant une couche de bitume, la couche de bitume comprenant un côté inférieur auto-adhésif et un côté supérieur, la structure stratifiée comprenant une couche supérieure résistant aux UV au niveau du côté supérieur de la couche de bitume et un film de protection pelable résistant à l'eau sur le côté inférieur de la couche de bitume, la couche supérieure étant une couche supérieure résistant aux UV en aluminium, **caractérisée en ce que** la couche supérieure comprend des fibres apportant des irrégularités au niveau de la surface de la structure stratifiée appropriées pour une fixation de matériaux de construction tels que du béton, un adhésif d'assemblage de blocs, du ciment, du coulis de ciment, du mortier et du plâtre, dans laquelle les fibres comprennent des fibres de plastique et/ou des fibres de verre, de préférence des fibres de polyester et/ou des fibres de verre, et de manière davantage préférée des fibres de polyester.

2. Structure stratifiée selon l'une quelconque des revendications précédentes, les fibres comprenant des fibres de polyester.

3. Structure stratifiée selon l'une quelconque des revendications précédentes, les fibres dans la couche supérieure comprenant une distribution d'orientation essentiellement isotrope.

4. Structure stratifiée selon l'une quelconque des revendications précédentes, les fibres comprenant une longueur d'au moins 3 cm, de préférence d'au moins 5 cm, de manière davantage préférée d'au moins 7 cm, de manière encore davantage préférée d'au moins 9 cm, et de manière préférée entre toutes d'au moins 11 cm.

5. Structure stratifiée selon l'une quelconque des revendications précédentes, la couche supérieure comprenant au moins 30 fibres/cm², de préférence au moins 50 fibres/cm², de manière davantage préférée au moins 70 fibres/cm², de manière encore davantage préférée au moins 90 fibres/cm², de manière préférée entre toutes au moins 110 fibres/cm².

6. Structure stratifiée selon l'une quelconque des revendications précédentes, le film de protection résistant à l'eau étant pelable en parties.

7. Structure stratifiée selon la revendication 6 précédente, le film de protection résistant à l'eau comprenant une ligne de déchirure comprenant des perforations.

8. Structure stratifiée selon la revendication 7 précédente, les perforations comprenant une longueur et une distance d'espacement intermédiaire, la longueur étant d'au moins 1 mm et d'au plus 3 mm, la longueur étant de préférence d'au moins 1,6 mm et d'au plus 2,4 mm, le rapport de la longueur à la distance d'espacement étant d'au moins 1 et d'au plus 3, de préférence d'au moins 1,5 et d'au plus 2,5.

9. Structure stratifiée selon l'une quelconque des revendications précédentes, la couche supérieure résistant aux UV étant en contact avec le côté supérieur de la couche de bitume et le film de protection résistant à l'eau étant en contact avec le côté inférieur auto-adhésif de la couche de bitume.

10. Procédé pour empêcher le transfert de l'humidité dans une structure de bâtiment comprenant les étapes suivantes :
- construction d'une première partie de la structure de bâtiment, la première partie comprenant une surface sensiblement horizontale, la surface comprenant un premier bord ;
- fourniture d'une structure stratifiée selon l'une quelconque des revendications 1 à 9 précédentes, la couche supérieure comprenant une ligne de placement visuellement observable et le film de protection comprenant une ligne prédécoupée sensiblement parallèle à la ligne de placement ;
- application d'une portion de la structure stratifiée sur la surface avec le premier bord et la ligne de placement étant positionnés sensiblement coaxialement ;
- construction d'une seconde partie de la structure de bâtiment sur la partie appliquée de la structure stratifiée ;
- fourniture d'une feuille d'extension ;
- pelage d'une partie du film de protection adjacente à la ligne prédécoupée ; et
- collage de la feuille d'extension sur au moins une portion de la partie de la structure stratifiée qui a été débarrassée du film de protection.

11. Procédé selon la revendication 10 précédente, utilisé pour empêcher l'humidité ascendante dans une paroi, la paroi étant de préférence une paroi de cavité, de préférence la paroi adjacente à une sous-structure pour une terrasse, la feuille d'extension recouvrant au moins partiellement la sous-structure de la terrasse.

12. Procédé selon la revendication 10 précédente, utilisé pour empêcher le transfert de l'humidité au niveau d'une connexion de fenêtre.

13. Procédé selon la revendication 10 précédente, utilisé pour empêcher le transfert de l'humidité au niveau d'un support de façade.

14. Structure de bâtiment comprenant une paroi comprenant une structure stratifiée selon l'une quelconque des revendications 1 à 9 précédentes.
